# EUROPEAN PATENT APPLICATION

(11) **EP 2 767 450 A1**
(43) Date of publication of application: **20.08.2014**
(21) Application number: 14164979.8
(22) Date of filing: 09.02.2012
(51) Int. Cl.: B60W 50/14, B62D 15/02, H04S 3/00

(54) **Lane departure warning system and a method for a lane departure warning system**

(30) Priority: 11.02.2011 SE 1150108
(62) Divisional of application: 12154658.4
(71) Applicant: Scania CV AB (publ), 151 87 Södertälje (SE)
(72) Inventor: KOLLEGGER, Peter, SE-413 26 GÖTEBORG (SE); FAGERLÖNN, Johan, SE-941 36 PITEÅ (SE)

(57) **Abstract**

A lane departure warning system (2'), comprising a lane monitoring unit (4') for delivering a location signal (6') which indicates the vehicle's position relative to the lane markings (22), a lane deviation unit (8') for calculating the vehicle's current deviation and the direction of deviation, and generating deviation signals (10'), and an alarm unit (12') for generating alarm signals (14',16'), comprising a first alarm signal (14') arranged to be generated if the vehicle's current deviation exceeds a first threshold value (T1,T1'), wherein said alarm unit is adapted to generating on the basis of said location signal a second alarm signal (16') which indicates the vehicle's position relative to the lane markings. The second alarm signal (16') is an acoustic signal and the vehicle's position relative to the lane markings is indicated by altering the balance of the vehicle's sound system.

## Description

### Field of the invention

The present invention relates to a lane departure warning system, and a method for a lane departure warning system, for vehicles, according to the preambles of the independent claims. More specifically the invention relates to a system and a method for warning the driver of a vehicle, e.g. a truck, bus or car, if the vehicle is unintendedly about to leave its traffic lane.

### Background to the invention

A vehicle's unintended deviation from its traffic lane is one of the main causes of traffic accidents. There are many reasons for such unintended deviation, e.g. handling of and conversation via mobile telephones, inattention when setting the radio, falling asleep while driving.

In 2013 the European Union will introduce a requirement for heavy vehicles to be equipped with a so-called lane departure warning (LDW) system with specific requirements that the warning must be by sound or vibration and give an indication of the direction in which the vehicle is about to leave its traffic lane. There is also a specific requirement that the warning must reach the driver at the latest 0.3 m after the respective tyre has left the lane marking.

A conventional LDW system described for example in EP 1074430 is configured to monitor the vehicle's position on the road relative to the lane markings. Such systems often have a camera for saving the visible lane markings and an image processor for determining the vehicle's position relative to its lane. When the vehicle crosses or is about to cross the lane marking, the system generates automatically a warning to the driver.

US 2009/0021358 refers to an LDW system adapted to delivering first and second warning signals based on deviation from a traffic lane. The first warning signal is generated when the vehicle's wheels approach the lane markings, and may be regarded as a pre-warning. The second warning signal is generated when the vehicle's wheels pass the lane markings. The first warning signal may take the form of vibration in the steering wheel and the second warning signal the form of a lamp signal.

US 20100295707 Al also relates to an LDW system which is adapted to generating warning signals, e.g. lamp, acoustic and/or haptic signals, with different intensities depending inter alia on the degree of activeness exhibited by the driver.

EP 1663711 A1 also refers to an LDW system intended inter alia to reduce the number of false or unnecessary alarms. This system also monitors the driver's activeness by measuring a number of parameters relating to how he/she is driving the vehicle, e.g. in terms of steering activity, pedal use and acceleration changes. If these parameters indicate that the driver is actively driving the vehicle, the LDW system need not generate any warning signals.

One of the basic problems of today's LDW systems is the desirability of warning the driver sufficiently to wake him/her if he/she has fallen asleep, while at the same time making it possible, depending on the situation, for there to be, without any system errors, a very large number of warnings per 10 km travelled. It is therefore very important to provide a system which is highly acceptable to drivers.

The object of the present invention is to propose an improved lane departure warning system which helps to reduce the number of alarms generated when the vehicle is on the point of leaving its traffic lane but which at the same time results in improved safety.

### Summary of the invention

The above objects are achieved with the invention defined by the independent claims.

Preferred embodiments are defined by the dependent claims.

The present invention is based on the inventors' understanding and knowledge of research into the ability of human beings to perceive changes in their environment, and in particular their ability to perceive changes of where an acoustic signal is coming from. Applying this knowledge to generate warning signals in conjunction with LDW systems results in a system which is highly acceptable to users.

More specifically, the present invention uses the fact that human beings react to significant changes in the sonic environment. These may be acoustic changes, e.g. a rising sound level. They may also be semantic changes, e.g. one's name being heard. The intention of the present invention is to use changes in directions of sounds to attract driver attention. Research has shown that sounds generated in a direction in a vehicle can draw the driver's attention to the specific direction, see for example the article entitled "Assessing the Effectiveness of Various Auditory Cues in Capturing a Driver's Visual Attention" by Cristy Ho and Charles Spence, published in Journal of Experimental Psychology: Applied, 2005, vol. 11, No. 3, pages 157-174 (http://www.apa.org/pubs/journals/features/xap-11-3-157.pdf).

A conventional warning system, e.g. of the kind described above, often uses specifically intended warning signals to attract attention. The intention of the present invention is primarily to use existing sound from the vehicle's radio installation. When the sound from the radio installation is panned in the driver environment, an acoustic change takes place whereby sound is focused to one direction in the vehicle. This change in direction may potentially draw the driver's attention to that direction without any other warning signal having to be generated. Panning of music to indicate directions has been tested in aviation with promising results.

The present invention is based on utilising information which comes from the LDW system in the form of the vehicle's position and bearing relative to its traffic lane and on providing a "gentler" and more acceptable indication that a warning is on the way before the actual legally required warning comes.

The idea is also based on utilising existing signals but altering them to provide the driver with a gentle indication that the vehicle will shortly be leaving its traffic lane.

According to a preferred embodiment, using existing signals entails altering the "balance" of the sound which comes from the radio, e.g. moving all of the sound to the right side of the cab to indicate an imminent deviation to the right.

Utilising existing signals may however also entail using the flasher sound at a different rate, indicating by the flasher symbol, vibrating a massage seat, putting vibration into the steering wheel or applying to the steering wheel a slight turning motion in the opposite direction.

The sound balance may depend on the distance or time to crossing the line.

The indication has also to be such that if the driver counteracts the deviation, i.e. steers back into the traffic lane, the indication disappears.

The solution according to the present invention differs from other solutions in that the driver is helped to keep the vehicle more in the middle of its lane without being appreciably disturbed, while at the same time the LDW system is adapted to responding to the vehicle leaving the lane by delivering an alarm signal strong enough to, for example, wake a driver who has fallen asleep.

The LDW system according to the invention is more intuitive for the driver in that the indication which alters the alarm signal disappears when he/she counteracts the deviation.

The system utilises sounds/vibrations/lamps which are "naturally" present but are altered in a way which is noticeable without being disturbing, and the present invention is relatively easy to implement since it involves no further hardware.

### Brief description of drawings

Figure 1 is a schematic block diagram illustrating a first embodiment of the present invention.
Figure 2 depicts a vehicle in a traffic lane with lane markings.
Figure 3 is a flowchart illustrating the method according to the present invention.
Figures 4 and 5 are graphs illustrating two embodiments of the present invention.
Figure 6 is a schematic block diagram illustrating another embodiment of the present invention.

### Detailed description of preferred embodiments of the invention

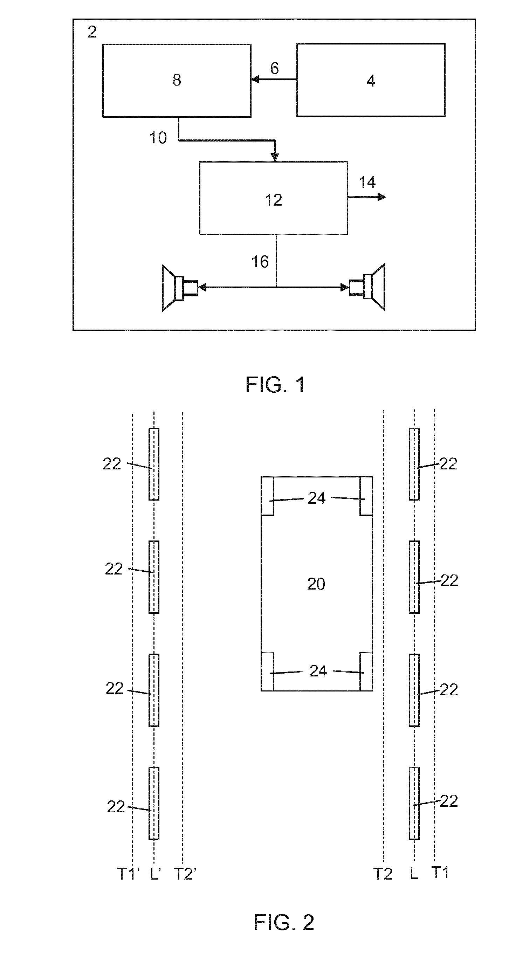

A lane departure warning system according to a first embodiment of the present invention will now be described with reference to Figure 1.

Figure 1 depicts an LDW system 2 for a vehicle 20 (see Figure 2), comprising a lane monitoring unit 4 adapted to delivering a location signal 6 which indicates the vehicle's position relative to the lane markings 22 (see Figure 2) of a road. The system further comprises a lane deviation unit 8 adapted to calculating on the basis of said location signal 6 the vehicle's current deviation and prospective deviations from its lane, and the direction of deviation relative to the vehicle, and to generating on the basis thereof one or more deviation signals 10.

The system also comprises an alarm unit 12 adapted to generating on the basis of said deviation signals 10 one or more alarm signals 14,16 to the vehicle's driver, comprising a first alarm signal 14 arranged to be generated if the vehicle's current deviation exceeds a first threshold value (T1,T1') which represents an impermissible deviation, and a second alarm signal 16 arranged to be generated if said deviation signal 10 indicates that the vehicle will impermissibly deviate from its lane. Said second alarm signal 16 is an acoustic signal which indicates the direction of prospective deviation relative to the vehicle.

The second alarm signal 16 may for example be implemented in the form of a change in the existing acoustic environment in the driver's cab, e.g. by the radio programme or other material already coming through the loudspeakers being altered so that its sound balance changes. If a first alarm signal has thereafter to be generated, the radio programme is interrupted and the signal is generated to warn the driver.

The lane monitoring unit is configured, according to a preferred embodiment, as an image processing system comprising one or more cameras and an image processor, which do not appear in the diagrams. The camera or cameras are for example fitted at the windscreen, to the control panel or on top of the vehicle to save visible lane markings on the road. The image information generated by the camera is fed to the image processor, which delivers to the deviation unit a location signal which indicates the vehicle's position relative to the lane markings.

The alarm unit is adapted to generating optical, acoustic and/or haptic signals to warn the driver. The diagram shows two loudspeakers for delivering the second alarm signal in the form of acoustic signals. It should be noted that the first alarm signal may also be delivered in the form of an acoustic signal alone or in combination with optical and/or haptic signals. The second alarm signal may be delivered in combination with optical and/or haptic signals.

Figure 2 depicts a vehicle 20 in a traffic lane with lane markings 22. Calculating the vehicle's location is preferably based on calculating the position of its wheels 24 relative to the lane markings 22. In the diagram the centrelines of the lane markings on the respective right and left sides of the vehicle are marked L and L'. Respective first threshold values T1 and T1' indicate the distance from the lane markings at which the LDW system has to generate a first alarm signal. This threshold value according to a preferred embodiment is 0.3 metre beyond the markings.

Respective second threshold values T2 and T2' are also depicted. When any of the vehicle's wheels is nearer to the lane markings than the respective second threshold value, the system is adapted to generating the second alarm signal. The second threshold value may for example be 0.1 metre within the markings. Alternatively the second threshold value may be zero so that the second alarm signal is generated when a wheel of the vehicle is on the lane markings.

It is also possible that the second threshold value may have a significantly larger value, e.g. of the order of 0.5 metre, and for there to be one or more further threshold values between the second threshold value and the lane markings. This makes it possible to provide a second alarm signal which varies with the distance between the position of the vehicle wheel and the lane markings.

According to a preferred embodiment, the direction of prospective deviation is indicated by altering the balance of the vehicle's sound system.

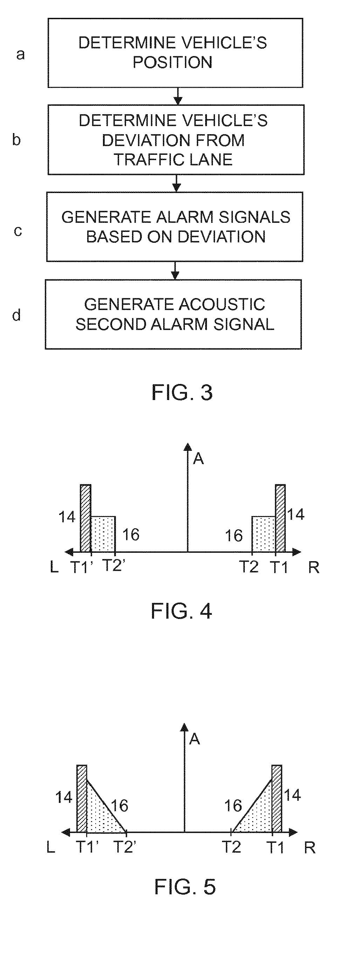

According to an embodiment, the change in the sound balance takes place at a stage where the prospective deviation is less than the second threshold value or where the vehicle's position relative to the lane markings indicates a prospective deviation. This is depicted schematically in Figure 4, in which the second alarm signal is designated 16 and the first alarm signal 14. In this diagram the first alarm signal has a higher amplitude (A) than the second alarm signal. This may for example mean that the first alarm signal is delivered at a higher intensity (louder sound) than the second alarm signal.

According to another embodiment, the change in the sound balance takes place continuously with changes in the vehicle's position relative to the lane markings. This is depicted schematically in Figure 5, in which the second alarm signal is designated 16 and the first alarm signal 14. In this diagram the first alarm signal has a higher amplitude (A) than the second alarm signal. Here the change in the sound balance takes place gradually as the vehicle approaches the lane markings. This diagram also illustrates an embodiment in which the second alarm signal is variable in such a way that its intensity depends on how near in time the vehicle is to leaving its lane, or on its distance to leaving the lane, so that the intensity of the second alarm signal increases continuously the nearer the vehicle is to leaving the lane.

More specifically, the alarm unit is adapted to generating the second alarm signal when the deviation signal indicates that a prospective deviation is below a predetermined second threshold value.

According to an embodiment, the second threshold value represents a predetermined time before a deviation occurs, and according to another embodiment said second threshold value represents a predetermined distance between the vehicle and the lane markings.

In all the embodiments discussed above, if the deviation signal indicates that the prospective deviation will not occur, e.g. that the vehicle has moved away from the lane markings, the alarm unit will stop generating the second alarm signal.

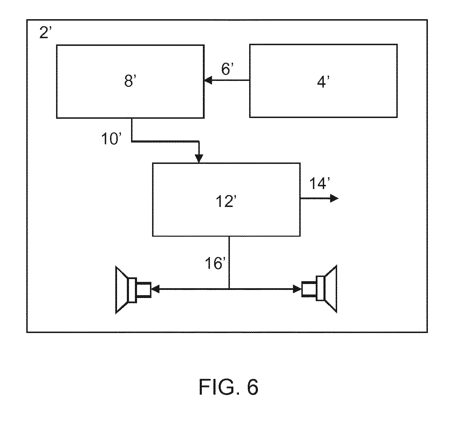

According to another embodiment of the present invention illustrated in the block diagram in Figure 6, the second alarm signal is generated on the basis of the vehicle's position relative to the lane markings.

With reference to Figure 6, the invention thus comprises a lane departure warning system 2' for a vehicle 20', comprising a main monitoring unit 4' adapted to delivering a location signal 6' which indicates the vehicle's position relative to the lane markings 22 of a road, a lane deviation unit 8' adapted to calculating on the basis of said location signal 6' the vehicle's current deviation and the direction of deviation relative to the vehicle, and to generating on the basis thereof one or more deviation signals 10'. It further comprises an alarm unit 12' adapted to generating on the basis of said deviation signals 10' one or more alarm signals 14',16' to the vehicle's driver, the first alarm signal 14' being adapted to being generated if the vehicle's current deviation exceeds a first threshold value (T1,T1') which represents an impermissible deviation. The alarm unit is adapted to generating on the basis of said location signal a second alarm signal 16' which indicates the vehicle's position relative to the lane markings, in the form of an acoustic signal.

The vehicle's position relative to the lane markings is preferably indicated by altering the balance of its sound system, which takes place continuously depending on the vehicle's position relative to the lane markings.

In other respects we cite the relevant sections of the description of the first embodiment which refer to configurations which may also be applicable for the second embodiment. For example, the intensity of the second alarm signal may change depending on the vehicle's position relative to the lane markings.

The present invention comprises also a method pertaining to a lane departure warning system for a vehicle.

With reference to Figure 3, the method comprises
a) determining the vehicle's position relative to the lane markings of a road,
b) calculating the vehicle's current deviation and prospective deviations from its traffic lane and the direction of deviation relative to the vehicle, and generating on the basis thereof one or more deviation signals,
c) generating on the basis of said deviation signals one or more alarm signals to the vehicle's driver, comprising a first alarm signal arranged to be generated if the vehicle's deviation exceeds a first threshold value which represents an impermissible deviation, and a second alarm signal arranged to be generated if said deviation signals indicate that the vehicle will impermissibly deviate from its traffic lane.
   The method further comprises:
d) generating said second alarm signal in the form of a sound signal which indicates the direction of prospective deviation relative to the vehicle.

The direction of prospective deviation is preferably indicated by altering the balance of the vehicle's sound system.

According to an embodiment, the change in the sound balance takes place at a stage where the prospective deviation is less than the second threshold value or where the vehicle's position relative to the lane markings indicates a prospective deviation. Alternatively, the change in the sound balance takes place continuously depending on the vehicle's position relative to the lane markings.

These embodiments were discussed in more detail above with reference to Figures 4 and 5.

The alarm unit is adapted to generating the second alarm signal when the deviation signal indicates that a prospective deviation is less than a predetermined second threshold value. The second threshold value may either represent a predetermined time before a deviation occurs or a predetermined distance between the vehicle and the lane markings. According to an embodiment of the method according to the present invention, the second alarm signal is variable in such a way that its intensity depends on how near in time the vehicle is to leaving its lane, or on the vehicle's distance to leaving its lane, so that the intensity of the second alarm signal increases continuously the nearer the vehicle is to leaving the lane.

In all embodiments of the method according to the invention, if the deviation signal indicates that the prospective deviation will not occur, the alarm unit will preferably stop generating said second alarm signal.

The invention comprises also a method which implements the lane departure warning system according to the second embodiment.

This method comprises the steps of
a) determining the vehicle's position relative to the lane markings of a road,
b) calculating the vehicle's current deviation from its lane and the direction of deviation relative to the vehicle, and generating on the basis thereof one or more deviation signals,
c) generating on the basis of said deviation signals one or more alarm signals comprising a first alarm signal arranged to be generated if the vehicle's deviation exceeds a first threshold value which represents an impermissible deviation.
   The method further comprises
d) generating on the basis of said location signal a second alarm signal which indicates the vehicle's position relative to the lane markings, said second alarm signal being an acoustic signal.

According to a method, the vehicle's position relative to the lane markings is indicated by altering the balance of the vehicle's sound system, which preferably takes place continuously depending on the vehicle's position relative to the lane markings.

The present invention may be implemented in the form of software or in the form of one or more hardware items or in the form of a combination of software and hardware. The invention will then comprise a computer programme product with programme code for performing the various steps of the invention when the programme code is run on a computer.

The present invention is not restricted to the preferred embodiments described above. Sundry alternatives, modifications and equivalents may be used. The above embodiments are therefore not to be regarded at limiting the invention's protective scope which is defined by the attached claims.

## Claims

1. A lane departure warning system (2') for a vehicle (20'), comprising a lane monitoring unit (4') adapted to delivering a location signal (6') which indicates the vehicle's position relative to the lane markings (22) of a road,
a lane deviation unit (8') adapted to calculating on the basis of said location signal (6') the vehicle's current deviation and the direction of deviation relative to the vehicle, and to generating on the basis thereof one or more deviation signals (10'), and
an alarm unit (12') adapted to generating on the basis of said deviation signals (10') one or more alarm signals (14',16') to the vehicle's driver, comprising a first alarm signal (14') arranged to be generated if the vehicle's current deviation exceeds a first threshold value (T1,T1') which represents an impermissible deviation, wherein said alarm unit is adapted to generating on the basis of said location signal a second alarm signal (16') which indicates the vehicle's position relative to the lane markings, and that said second alarm signal (16') is an acoustic signal,
**characterised in that** the vehicle's position relative to the lane markings is indicated by altering the balance of the vehicle's sound system.

2. The lane departure warning system according to claim 1, in which the change in the sound balance takes place continuously depending on the vehicle's position relative to the lane markings.

3. A method pertaining to a lane departure warning system for a vehicle, comprising
a) determining the vehicle's position relative to the lane markings of a road,
b) calculating the vehicle's current deviation from its lane and the direction of deviation relative to the vehicle, and generating on the basis thereof one or more deviation signals,
c) generating on the basis said the deviation signals one or more alarm signals comprising a first alarm signal arranged to be generated if the vehicle's deviation exceeds a first threshold value which represents an impermissible deviation,
d) generating on the basis of said location signal a second alarm signal which indicates the vehicle's position relative to the lane markings, and that said second alarm signal is an acoustic signal,
**characterised in that** the method further comprises that:
the vehicle's position relative to the lane markings is indicated by altering the balance of the vehicle's sound system.

4. A method according to claim 3, in which the change in the sound balance takes place continuously depending on the vehicle's position relative to the lane markings.
